# EUROPÄISCHE PATENTSCHRIFT

(11) **EP 2 341 710 B1**
(45) Veröffentlichungstag und Bekanntmachung des Hinweises auf die Patenterteilung: **26.06.2019**
(21) Anmeldenummer: 10193614.4
(22) Anmeldetag: 03.12.2010
(51) Int. Cl.: H04N 7/18, G08B 13/196

(54) **Verfahren zur sicheren Übertragung von Videosignalen von mehreren Videoquellen über ein Netzwerk an mehrere Monitore**
Method for the secure transfer of video signals from multiple video sources to multiple monitors over a network
Procédé de transmission sécurisée de signaux vidéo de plusieurs sources vidéo par le biais d'un réseau vers plusieurs moniteurs

(30) Priorität: 29.12.2009 DE 102009060845
(43) Veröffentlichungstag der Anmeldung: 06.07.2011
(73) Patentinhaber: Funkwerk video systeme GmbH, 90471 Nürnberg (DE)
(72) Erfinder: Richter, Manfred, 90765 Fürth (DE)
(74) Vertreter: Pröll, Jürgen

(56) Entgegenhaltungen:
- WO-A1-2004/068855
- US-A1- 2003 025 599
- US-A1- 2004 085 445
- US-A1- 2008 152 016
- US-A1- 2008 294 789
- US-B1- 7 508 941

## Beschreibung

Die Erfindung betrifft ein Verfahren zur Übertragung von Videosignalen von mehreren Videoquellen über ein Netzwerk an mehrere Monitore.

Es sind bereits Überwachungsanlagen bekannt, welche mehrere Videokameras und mehrere Monitore aufweisen, wobei von den Videokameras bereitgestellte Videosignale zu den Monitoren übertragen und auf deren Display dargestellt werden. Dabei wird jeweils vorgegeben, welche Videokamera welchem Monitor zugeordnet sein soll.

Derartige Überwachungsanlagen kommen beispielsweise in Bahnhöfen zum Einsatz, um eine Überwachung der Gleise, der Unterführungen, der Bahnhofshalle, etc., vornehmen zu können. Die einzelnen Kameras sind dabei an verschiedenen Orten des Bahnhofs fest installiert. Die Monitore befinden sich in einem Kontrollraum.

Des Weiteren können derartige Überwachungsanlagen auch in Flughäfen, Kaufhäusern, Firmengeländen, Fabriken, Banken, Gefängnissen, usw., verwendet werden.

Bei derartigen Überwachungsanlagen ist es notwendig sicherzustellen, dass stets das von einer vorgegebenen Videokamera momentan bereitgestellte Videosignal auf einem vorgegebenen Monitor dargestellt wird.

Insbesondere ähnliche Videoinhalte (Bahngleise, Strassen,..) können bei fehlerhafter Videoquellenzuordnung zu schwerwiegenden Schlussfolgefehlern führen.

Im Falle einer Übertragung von analogen Videosignalen über eine analoge Videoübertragungsstrecke ist es bekannt, diese Sicherstellung einer korrekten Aufschaltung unter Verwendung einer Quellenkennung vorzunehmen, die in die Zeile 16 der Austastlücke des jeweiligen Videosignals eingesetzt wird, auf der Empfangsseite aus dem empfangenen analogen Videosignal abgetrennt wird und mit einer auf der Empfangsseite vorhandenen Sollkennung verglichen wird. Stimmen die miteinander verglichenen Kennungen nicht überein, dann wird das übertragene Videosignal nicht an den Monitor weitergegeben. Die Videoquellenkennung umfasst hierbei nur wenige Bit und ist in der Zeile 16 ungeschützt. Ein Echtzeitvergleich (Quelle/Senke) war nicht vorgesehen.

In digitalen Übertragungssystemen, die mit einer Kompression/Dekompression der Videosignale arbeiten, kann das vorstehend beschriebene Verfahren nicht verwendet werden, da bei derartigen Systemen die genannte Zeile 16 nicht übertragen wird.

Aus der US 7,508,941 B1 ist bereits ein Verfahren zur Übertragung von Videosignalen von mehreren Videoquellen in Form von digital codierten Videosignalen über ein Netzwerk an mehrere Monitore bekannt ist. Dabei werden die von den Videoquellen bereitgestellten Videosignale mittels Eingangsports aufweisender Video-Coder digital codiert und die digital codierten Videosignale in Form von Datenströmen über das Netzwerk übertragen. Die über das Netzwerk übertragenen Datenströme werden Decodern zugeführt, an deren Ausgangsports jeweils ein Monitor angeschlossen ist. Jeder Videoquelle wird eine eigene Quellenkennung zugeordnet. Diese Quellenkennung wird bei der Videocodierung in den über das Netzwerk zu übertragenden Videodatenstrom eingesetzt. Aus dem über das Netzwerk übertragenen Videodatenstrom wird im Videdecoder die im Datenstrom des codierten Videosignals enthaltene Quellenkennung separiert und mit einer im Videodecoder vorliegenden Quellenkennung verglichen. Stimmen die miteinander verglichenen Quellenkennungen überein, dann werden die übertragenen Videodaten als authentisch angesehen. Des Weiteren kann in die übertragenen Videodaten ein geeignetes Bitmuster eingesetzt sein, so dass in dem auf einem empfangsseitigen Monitor dargestellten Bild ein dem Bitmuster entsprechendes Overlay-Bild angezeigt wird. Beim Fehlen diese Overlay-Bildes kann der Betrachter des empfangsseitig dargestellten Bildes darauf schließen, dass das dargestellte Bild nicht authentisch ist. Bei dem genannten Bitmuster kann es sich um einen Zeitstempel handeln. Dieser Zeitstempel wird von einem auf der Empfangsseite angeordneten Computerterminal vorgegeben und in Form eines Befehlsignals auf die Sendeseite übertragen. Der genannte Zeitstempel kann vom empfangsseitigen Computerterminal von Zeit zu Zeit modifiziert werden.

Die Aufgabe der Erfindung besteht darin, ein Verfahren zur Übertragung von Videosignalen von mehreren Videoquellen über ein Netzwerk an mehrere Monitore anzugeben, das im Falle einer Übertragung digitaler Videosignale von einer jeweils gewünschten Videoquelle zu einem vorgegebenen Monitor auftretende Fehler erkennt.

Diese Aufgabe wird durch ein Verfahren mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen darin, dass bei digitalen Übertragungssystemen, insbesondere solchen, die mit einer Komprimierung/Dekomprimierung der Videosignale arbeiten und deren Videodaten in einen Übertragungs-/IP-Datenstrom verpackt werden, im hohen Maße sichergestellt ist, dass stets die von einer vorgegebenen Videoquelle momentan bereitgestellten Echtzeit-Videosignale auf einem vorgegebenen Monitor nicht vertauscht dargestellt werden. Wird an irgendeiner Stelle des Netzwerkes die Videosignalübertragung derart manipuliert, dass anstelle des von der vorgegebenen "Live"-Videoquelle momentan bereitgestellten proprietär gekennzeichneten Videosignals
- ein von einer beliebigen anderen Videoquelle geliefertes Videosignal,
- eine andere Videoblickrichtung als die gekennzeichnete,
- eine andere Videokompressionsart, Videoauflösung, Bildrate, Bildqualität, Datenrate oder andere Videoeigenschaften als die gekennzeichnete,
- ein zeitverschobenes Videosignal außerhalb vorgegebener Zeitgrenzen,
- ein eingefrorenes Standbild am Video-Decoderausgang durch Netzwerkunterbrechung,
- ein eingefrorenes Standbild durch einen Bildspeicher auf der Übertragungsstrecke (bei weiteren Maßnahmen, wie in EP 1 254 567 B1 beschrieben und Auswertung im Video-Decoder) oder
- ein versehentlich oder durch Sabotage identischer Datenstrom (gleiche Sendeadresse/Portnummer aber ohne oder mit falscher Videokennung)
an den Video-Decoder geliefert wird, dann wird dies vom Video-Decoder erkannt und es wird eine Weiterleitung eines falschen Videosignals an den vorgegebenen Monitor verhindert.

Diese Vorteile werden im Wesentlichen dadurch erzielt, dass zusammen mit dem von der vorgegebenen Videoquelle bereitgestellten Videosignal sowohl eine der vorgegebenen Videoquelle zugeordnete Quellenkennung als auch eine Echtzeitinformation bildsynchron über das Netzwerk übertragen und auf der Empfangsseite ausgewertet werden und dass eine Weiterleitung des decodierten Videosignals an einen vorgegebenen Monitor nur dann vorgenommen wird, wenn die übertragene Quellenkennung mit der erwarteten Quellenkennung übereinstimmt und die übertragene Echtzeitinformation von der auf der Empfangsseite vorliegenden Echtzeitinformation um weniger als eine erlaubte Zeitdifferenz abweicht.

Bei MPEG komprimierten Signalen ist ein Referenzbild als sogenanntes I-Frame festgelegt. Alle nachfolgend übertragenen Differenzbilder benötigen dieses Referenzbild für eine vollständige Wiedergabe. Um nun bei der Übertragung Daten einzusparen und den Performancebedarf der Auswertung auf der Empfangsseite zu reduzieren kann anstatt der vollen bildsynchronen Quellenkennung auch nur eine bildsynchrone Quellenkennung mit dem zugehörigem I-Frame erfolgen. Bei einer GOP von 25 würde die Einsparung den Faktor 25 betragen und die Quellenkennungen im I-Frame alle Sekunden sind für eine Auswertung in den meisten Fällen ausreichend aktuell.

Vorzugsweise wird der zu übertragende Video-Datenstrom über eine digitale Übertragungsstrecke, beispielsweise ein LAN, d. h. ein LOCAL AREA NETWORK, WLAN, ISDN, PSTN oder andere Übertragungsmedien einschließlich dem Internet, übertragen. An ein derartiges Netzwerk können in einfacher Weise eine Vielzahl von Videoquellen und eine Vielzahl von Monitoren angeschlossen werden, ohne dass dadurch der Übertragungsaufwand wesentlich erhöht werden muss.

In vorteilhafter Weise werden die Quellenkennungen den Videoquellen fest zugeordnet und im Video-Coder videoeingangsportbezogen nichtflüchtig hinterlegt. Diese Zuordnung kann manuell mittels einer Bedieneinheit oder automatisch, beispielsweise von einem Videomanagementsystem, vorgenommen werden. Sie erfolgt vorzugsweise im Rahmen der Installation der Videoquellen und bleibt für alle nachfolgenden Videosignalübertragungen fest. Ein Teil oder eine Erweiterung der Videokennung mit dynamischer Vergabe ermöglicht auch sich ständig ändernde Videoquellen (Videomultiplexer oder Änderung der Position eines Schwenk-Neige-Kopfes (PTZ) und Zoomobjektives) vor dem Videocoderport zu erkennen. Als Beispiel wird eine PTZ-Anwendung Straßenkreuzung mit X-Positionen genannt. Neben der Blickrichtung können auch weitere andere Videoeigenschaften einer Videoquelle, wie Kompressionsart, Bildauflösung, Bildqualität, Bildrate, Datenrate, usw., mit einer dynamischen Quellenkennung gekennzeichnet und identifiziert werden.

Der Video-Coder setzt im Rahmen der Video-Codierung des von der jeweiligen Videoquelle bereitgestellten Signals automatisch die genannte Quellenkennung in den codierten Datenstrom ein, so dass im Betrieb der Anlage keine diesbezüglichen Benutzeraktivitäten notwendig sind.

Vorzugsweise werden die Quellenkennungen und ihre Zuordnung zu den Videoquellen auch im Videomanagementsystem nichtflüchtig hinterlegt. Dies hat den Vorteil, dass diese Informationen im Betrieb des Übertragungssystems bei Bedarf schnell und einfach an andere Komponenten des Systems übertragen werden können, beispielsweise wird an einen oder mehrere Video-Decoder - falls nicht fest zugeordnet - dynamisch eine bestimmte Quellenkennung übergeben. Das Videomanagementsystem kann dem Video-Decoder hiernach schnell und einfach Informationen dahingehend übermitteln, welche der Videokameras mit welchem der Monitore verbunden werden soll und welche Quellenkennung dieser Videoquelle zugeordnet ist. Um die richtige Videoquelle/Coder mit einem oder mehreren Video-Decodern/ Monitoren zu verbinden, müssen nun nicht fest zugeordnete Videoempfangs-und -Sendeadressen im Coder und Decoder vom Videomanagement dynamisch übergeben und die Videoquellen/Coder aktiviert und aufgeschaltet werden. Des Weiteren ist eine Leitstelle unter anderem dazu vorgesehen, dem Videomanagementsystem vorzugeben, welche Videoquelle jeweils aktiviert werden soll und welcher der Monitore dieser Videoquelle zugeordnet werden soll. Dies eröffnet der Leitstelle die Möglichkeit, eine zusätzliche unabhängige Kontrolle dahingehend durchzuführen, ob die jeweils vorgegebene Videoquelle mit dem Monitor, der dieser Videoquelle zugeordnet wurde, verbunden ist.

Die Informationen über die Quellenkennungen und deren Zuordnung zu den Videoquellen können auch einmalig vom Managementsystem an den Video-Decoder übertragen und in diesem nichtflüchtig abgespeichert werden. Dies hat den Vorteil, dass im späteren Betrieb des Übertragungssystems das Managementsystem dem Decoder nur noch mitteilen muss, welche der Videoquellen welchem der Monitor zugeordnet wurde. Eine Übertragung der Quellenkennungen und deren Zuordnung zur jeweiligen Videoquelle zum Video-Decoder während des Betriebs der Übertragungsanlage ist dann nicht mehr notwendig. Insbesondere wird dadurch auch eine sehr hohe Kennzeichnungssicherheit der jeweiligen Videoquelle erreicht, da die Videoquellenkennung nicht mehr ausgetauscht wird.

Im RTP (Real-time Transport Protocol)-Datenstrom, der z. B. als Datenträger für ein MPEG-Video benutzt wird, ist bereits eine zusätzliche Übertragung einer Zufalls-ID, die SSRC (Synchronisation Source), im Standard vorgesehen. Diese SSRC wird für jeden neuen Datenstrom neu vergeben. Das heißt für die Videoquellenidentifizierung kann diese Kennung nicht herangezogen werden. Ein wichtiger Grund für die Auswertung dieser SSRC auf der Empfangsseite ist die Detektion von Datenstromkollisionen bei zufällig doppelt vergebenen Datenstrom-Sendeadresse/Portnummer im Netzwerk/Internet. Im Prinzip kann der Datenstromempfänger zumindest feststellen, dass der "gleiche" Datenstrom doppelt vorhanden ist und einer davon ein ungültiger Datenstrom ist. Es ist also keine Unterscheidung möglich, welcher Datenstrom der gültige Datenstrom ist. Damit ist auch eine Sende/Empfangsadresse leicht sabotierbar, indem einfach die gleiche Sendeadresse/Portnummer eines korrekten Datenstromes in das Netzwerk gesendet wird. In den meisten Datenstrom-Kollisionsstrategien wird in diesem Fall gar kein Videobild mehr angezeigt, bis die Adressenkollision beseitigt ist.

Durch eine proprietäre zusätzliche Videoquellenkennzeichnung inklusive Echtzeitkennung, die nur einer Videoquelle zugeordnet ist und damit verschiedene Datenströme mit unterschiedlicher SSRC aber gleichen Sendeadressen nicht alle die gleiche Videokennung haben, ergibt sich ein weiterer Vorteil der Erfindung.

Es kann hiermit zwischen einem gültigen und nicht gültigen Datenstrom unterschieden werden, wobei der gültige Datenstrom trotz gleicher Sendeadresse/Port als störungsfreies Video wiedergegeben bzw. aufgezeichnet werden kann. Beim "falschen" Datenstrom fehlen die Videokennungen und/oder Echtzeitinformationen oder Videokennungen sind falsch und entsprechen nicht dem Original-Datenstrom, der am Empfänger erwartet wird.

Um die Sicherheit zur Erkennung von Speicherbildern in digitalen Datenübertragungen zu gewährleisten, können neben der Videoquellenkennung und Echtzeitkennung weitere Maßnahmen erfolgen:
a) Aktive Live-Bildkennung in Videoquelle/Kamera Bei dieser Maßnahme, wie auch in EP 1 254 567 B1 beschrieben, wird eine aktive Live-Kennung direkt im Videosignal der Kamera selbst vorgenommen. Hierbei wird der Inhalt der ersten gültigen Videozeilen einer Videoquelle/Kamera dynamisch mit der Bildfrequenz geändert. Eine Auswertung dieser Kennung kann ebenfalls im Video-Decoder erfolgen und damit eine Ausgabe des Bildes zum Monitor automatisch unterdrückt werden, wenn diese Zeileninhalte sich nicht mehr ändern. Für unterschiedliche Auflösungen der Übertragung kann diese aktive Kamera Live-Bildkennung entsprechend angepasst werden.
b) "Ticker" in Kamera: Hierbei kann mit Hilfe eines in der Kamera im Videosignal eingeblendeten und bewegten Zeichens auf dem Monitor das Standbild optisch erkannt werden.

Um die Sicherheit einer korrekten Aufschaltung einer Videoquelle zu einem vorgegebenen Monitor weiter zu erhöhen, können alternativ oder zusätzlich zur weiteren Kennung zusätzliche Kennungen in das zu übertragende codierte Signal eingesetzt, auf die Empfangsseite übertragen und dort ausgewertet werden. Der Video-Decoder gibt das decodierte Videosignal nur dann an den vorgegebenen Monitor aus, wenn die aus dem übertragenen Datenstrom separierten zusätzlichen Kennungen mit den im Video-Decoder abgespeicherten zusätzlichen Kennungen übereinstimmen. Bei einer dieser zusätzlichen Kennungen kann es sich um eine Adressinformation für den vorgegebenen Monitor handeln, die im Video-Coder nichtflüchtig abgespeichert ist und von diesem in das zu übertragende codierte Video-Signal eingesetzt wird.

Vorzugsweise werden diese zusätzlichen Kennungen vom Videomanagementsystem an den Video-Coder übertragen und bei statischen Kennungen in diesem abgespeichert. Dies hat den Vorteil, dass sie bei der Video-Codierung schnell, einfach und automatisch in das codierte Video-Signal eingesetzt werden können.

Eine vorteilhafte Ausgestaltung besteht darin, dass das Videomanagementsystem dem Video-Coder erst im Rahmen der Aktivierung einer der Videoquellen eine Information darüber übermittelt, welcher Monitor der aktivierten Quelle zugeordnet sein soll. Dies erlaubt es bei Bedarf, schnell und einfach eine Veränderung der Zuordnung zwischen Monitor und Videoquelle vorzunehmen.

In vorteilhafter Weise wird die Quellenkennung proprietär in Form einer rekursiven Verschlüsselung über das Netzwerk übertragen. Dies erschwert es Unberechtigten, die Quellenkennung anhand des übertragenen Signals zu ermitteln. Zur weiteren Erhöhung der Sicherheit können die Verschlüsslungen mit einem dynamischen Schlüssel erfolgen, wobei Sender und Empfänger mit kleiner Zeitoleranz synchron immer gleiche Schlüssel benötigen, um eine korrekte Auswertung machen zu können. Auf der Empfangsseite wird die empfangene verschlüsselte Quellenkennung wieder decodiert und mit dem Sollwert im Decoder verglichen. Die Quellenkennung kann über eine Decoder-Datenschnittstelle einem Leitsystem zur unabhängigen Auswertung zur Verfügung gestellt werden.

Vorzugsweise wird dem Videomanagement von der Leitstelle vorgegeben, welche Videoquelle aktiviert werden soll und welcher Monitor der aktivierten Videoquelle zugeordnet werden soll. Aufgrund der Kenntnis dieser Zuordnung hat die Leitstelle die Möglichkeit, anhand der vom Video-Decoder gelieferten Videoquellenkennsignale und Quellenechtzeitinformation ebenfalls zu überprüfen, ob der aktivierten Videoquelle der richtige Monitor zugeordnet ist und das Videosignal in Echtzeit (live) übertragen wird. Diese Überprüfung kann dann von einem mit der Leitstelle verbundenen Monitor angezeigt werden oder zu anderen entsprechenden Maßnahmen genutzt werden. Durch eine unabhängige mehrfache Auswertung der Quellenkennungen und Verknüpfung dieser Auswertungen können auch Fehler der Einzelsysteme wie Video-Decoder- und Leitzentralenauswertung erkannt und bei Bedarf korrigiert werden.

Eine der Leitzentralenmaßnahmen wäre eine Abschaltung des entsprechenden Videosignals zum Monitor oder eine Umschaltung auf ein Testbild mit Warnhinweis, solange die Quellenkenninformation nicht der Anforderung/Erwartung entspricht

In vorteilhafter Weise erfolgt auf einem Monitor in der Leitzentrale eine Anzeige, die eine korrekte oder fehlerhafte Videosignalübertragung signalisiert. Zusätzlich dazu kann das Leitsystem eine fehlerhafte Videosignalübertragung auch akustisch signalisieren. Dadurch wird das Bedienpersonal über die fehlerhafte Videosignalübertragung informiert.

Eine erste automatisierte Quellenidentifikation erfolgt bereits im jeweiligen Decoder in Bezug auf jeden Videoausgangsport und unabhängig vom Leitsystem, so dass auch einfachere Systemlösungen ohne ein zusätzliches Leitsystem auskommen. Hierzu werden die dem jeweiligen Videoausgangsport zugeordneten Sollwerte der Quellenkennungen mit den empfangenen Istwerten der Videoquellen- und Echtzeitkennung und eventuellen anderen zusätzlichen empfangenen Kennungen verglichen. Mit dieser Verifikation des Soll-Istzustandes und Auswertung korrekt/nicht korrekt können zusätzliche Ereignisse verknüpft werden.

Ein jeweils dem Videoausgangsport zugehöriger Kontaktausgang ist nur bei korrekter Quellenkennung aktiv. Damit wird eine einfache Videoidentifikationsausgabe und Anzeige der Quellenkennungs-Korrelation erreicht. Der Schaltkontakt kann auch zum Steuern weiterer Komponenten benutzt werden.

Der jeweilige Videoausgangsport gibt das empfangene Videosignal nur bei korrekter Quellenkennung aus. Andernfalls wird ein alternatives Fehlerbild mit einer Fehlerkennzeichnung wie z.B. "NO VSID" (keine korrekte Videoquellen ID) ausgegeben.

Texteinblendungen von Videoquellen IST/Sollwert erfolgen auf dem dem Videodecoderausgang zugeordneten Monitor.

Dies ist insbesondere dann von Vorteil, wenn die automatische Videoabschaltung bei nicht korrelierendem Quellenkennungsvergleich nicht aktiv ist. Die Darstellung ist eine Einblendung, die eine korrekte oder fehlerhafte Videosignalübertragung signalisiert. Vorzugsweise erfolgt dabei eine Einblendung von im Video-Decoder miteinander verglichenen Kennungen, insbesondere die empfangenen Ist-Videoquellenkennungen und Ist-Echtzeitinformationen sowie die Sollquellenkennungen und Soll-Echtzeitinformation auf der Decoderseite. Werden auf dem Display des Monitors verschiedene Ist/Soll-Quellenkennungen angezeigt, dann erkennt das Bedienpersonal, dass eine fehlerhafte Videosignalübertragung vorliegt.

Werden zu einer Decoder-Empfangsadresse/Port versehentlich oder mit Sabotageabsicht mehrere identische RTP-Datenströme mit der jeweils gleichen Empfangsadresse/Port gesendet, so erfolgt eine Ausgabe auf dem zugehörigen Videoausgang nur mit dem Videosignal mit der korrekten Videoquellenkennung. Alle anderen ungültigen RTP-Datenströme (ohne oder mit falscher Videoquellenkennung) führen zu keiner Störung der korrekten Videoquelle.

Auch eine dem jeweiligem Videoausgang zugeordnete Datenschnittstelle (z. B. COM- oder USB-Port) liefert alle dem Videosignal zugehörigen empfangenen Quellenkennungen synchron zum Videoausgabebild. Hiermit lassen sich über ein PC Hyperterminal die empfangenen Quellenkennungen direkt visuell darstellen und überprüfen. Des Weiteren kann hiermit ein unabhängiges System, welches die Soll-Quellenkennungen hat, eine eigene unabhängige Auswertung der Identität der Videoquelle vornehmen und bei Bedarf Maßnahmen ableiten.

An Stelle von Videokameras und/oder Codern können auch andere Signalquellen verwendet werden, beispielsweise PCs, DVDs oder LAN-Kameras.

Weitere vorteilhafte Eigenschaften der Erfindung ergeben sich aus den nachfolgenden Erläuterungen verschiedener Ausführungsbeispiele.

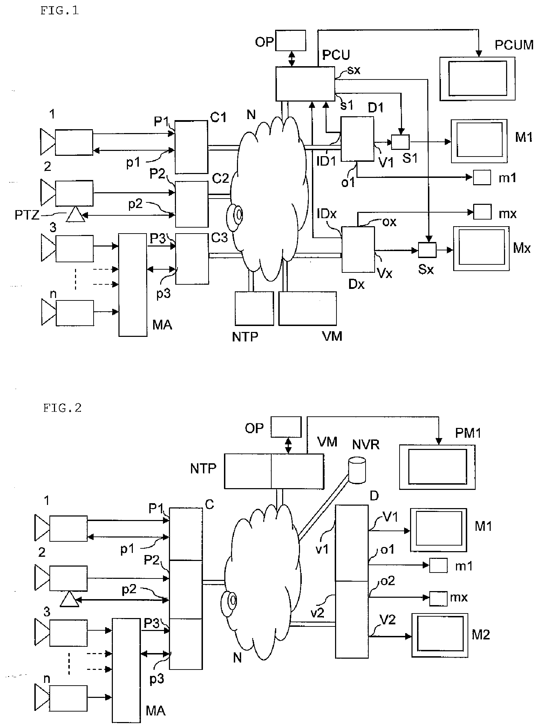

Die Figur 1 zeigt eine Blockdarstellung einer Vorrichtung zur Übertragung von Videosignalen. Hier erfolgt die Videoidentitätsprüfung im Videodecoder D1 bis Dx und unabhängig in einem Leitsystem PCU. Die Anordnung ist durch die mehrstufige Sicherheitslösung (mehrfache unabhängige Video-Identitätsüberprüfung) gegen Anzeigen von nicht gewollten Videoquellen sehr hoch abgesichert.

Die Figur 2 zeigt eine einstufige Lösung, bei der die Videoidentitätsprüfung im Videodecoder D erfolgt und Teile der Leitzentralenfunktion PCU vom Videomanagementsystem VM übernommen werden. In dieser Figur ist auch zusätzlich eine PC-Decoderlösung im Videomanagement-PC VM mit einer Videoquellenauswertung wie im Hardwaredecoder möglich. Somit wird auch auf einem PC-Monitor eine ungewollte Videoquelle nicht angezeigt.
Auch für eine Aufzeichnung auf einem Netzwerkvideorekorder werden die Videoquellenkennungen und Echtzeitinformationen verwendet.

Die Vorrichtung in Figur 1 weist Videokameras 1, 2, 3 bis n auf, die mit jeweils einem Eingangsport P1, P2, P3 der Video-Coder C1, C2 und C3 verbunden sind. Die Videokamera 1 ist mit dem Eingangsport P1 des Video-Coders C1 verbunden. Die Videokamera 2 ist an den Eingangsport P2 des Video-Coders C2 angeschlossen. Die Videokameras 3 bis n sind über eine Matrix MA mit dem Eingangsport P3 des Video-Coders C3 verbunden. Die Video-Coder C1 bis C3 sind zur Video-Codierung der von den Videokameras bereitgestellten Videosignale vorgesehen, vorzugsweise zu einer MPEG4-Codierung.

Zur Konfiguration/Steuerung von an den jeweiligen Videoport P1 bis P3 angeschlossenen Zusatzkomponenten (Kameras, Schwenk-Neigekopfe, Matrix,....) gibt es jeweils zugeordnete bidirektionale Schnittstellen p1 bis p3. Diese Schnittstellen können auch für Rückmeldungen der externen Komponenten zur weiteren dynamischen Videoquellenkennung verwendet werden.

Die codierten Videosignale werden in den Codern C1 bis C3 in verschiedene Datenströme gepackt und dann über ein Netzwerk N übertragen. Bei diesem Netzwerk N handelt es sich um ein LAN, d. h. ein LOCAL AREA NETWORK. Alternativ oder auch gemischt sind hierbei alle Arten der digitalen Übertragung möglich. Als Beispiele sind WLAN, ISDN und das Internet selbst bekannt.

Die über das Netzwerk N übertragenen Datenströme gelangen auf der Empfangsseite an die Decoder D1 bis Dx. Diese sind zur Video-Decodierung und zur Weitergabe der decodierten Videosignale an einen jeweils zugeordneten Monitor vorgesehen, der über eine Abschalteinrichtung mit dem jeweiligen Videoausgang des Decoders verbunden ist. Die Decoder D1 bis Dx weisen jeweils einen Ausgangsport V1, ..., Vx auf. Der Ausgangsport V1 ist über eine Abschalteinrichtung S1 mit einem Monitor M1 verbunden. Der Ausgangsport Vx ist über eine Abschalteinrichtung Sx an einen Monitor Mx angeschlossen.

Die in der Figur 1 gezeigte Vorrichtung weist des Weiteren ein Videomanagementsystem VM, eine Leitstelle PCU (primary controller unit) und einen Monitor PCUM sowie einen Bedienplatz OP auf. Für eine Echtzeitzeitsynchronisation aller Netzwerkkomponenten ist ein Zeitserver NTP (Network Time Protocol) vorgesehen. Das Videomanagementsystem VM ist über das Netzwerk N mit dem Zeitserver NTP, den Codern C1 bis C3, den Decodern D1 bis Dx und der Leitstelle PCU verbunden. Die Leitstelle PCU steht des Weiteren mit dem Decoder D1 bis Dx über separate Datenschnittstellen ID1 bis IDx und dem Monitor PCUM in Verbindung. Über die separaten Schnittstellen ID1 bis IDx erhält die Leitstelle PCU die verschiedenen übertragenen bildsynchronen Istwerte der Videoquellenkennungen und Echtzeitinformationen, die dem jeweiligen Ausgangsport V1, ..., Vx zugeordnet sind. Dadurch kann einfach und schnell ein Soll-Ist Vergleich zur Identifikation der Videoquellen- und Echtzeitüberprüfung durchgeführt werden, da die Leitstelle bereits alle relevanten Identifikationssolldaten besitzt. Nur eine positive Verifizierung/Auswertung der Videoidentifikation führt zu einer Weiterschaltung der jeweiligen Videosignale zu den Monitoren über die über Steuersignale s1 bis sx verbundenen Abschalteinrichtungen S1 bis SX.

Dem Videoausgangsport V1, ..., Vx ebenfalls zugeordnete Kontakte o1 bis ox sind nur bei einer korrekten Videoidentifikation durch die Videodecoderauswertung aktiv. Die jeweiligen Kontakte o1 bis ox können für eine entsprechende Anzeige m1 bis mx oder zur Schaltung von Zusatzgeräten genutzt werden.

Die in der Figur 1 dargestellte Vorrichtung kann beispielsweise zur Überwachung eines Bahnhofs verwendet werden. Die Kameras 1, 2, 3 bis n befinden sich auf verschiedenen Bahnsteigen des Bahnhofs. Die Decoder D1 bis Dx, die Abschalteinrichtung S1 bis Sx, die Monitore M1 bis Mx, das Videomanagementsystem VM, die Leitstelle PCU, der Bedienplatz OP und der Monitor PCUM sowie der Zeitserver NTP sind in einem Kontrollraum des Bahnhofs angeordnet.

Die dargestellte Vorrichtung dient zur Durchführung eines Verfahrens zur Übertragung von Videosignalen von den Videokameras 1, 2, 3 bis n über das Netzwerk N an die Monitore M1 bis Mx. Dabei werden die von den Videokameras bereitgestellten Videosignale mittels der Videoeingangsports P1, P2, P3 der zugehörigen Coder C1 bis C3 jeweils einer oder mehreren Codierungen unterworfen und jeweils zu einem Datenstrom zusammengefasst. Dieser Datenstrom wird über das Netzwerk N an einen oder mehrere Decoder D1 bis Dx übertragen. Diese weisen Videoausgangsports V1 bis Vx auf, wobei mit dem Videoausgangsport V1 der Monitor M1 und mit dem Videoausgangsport Vx der Monitor Mx verbunden ist.

Um sicherzustellen, dass stets ein vorgegebener Monitor mit einer vorgegebenen aktivierten Videokamera verbunden ist, werden verschiedene Maßnahmen ergriffen, die nachfolgend erläutert werden.

Zunächst wird jeder Videokamera und damit jedem der Eingangsports P1 bis P3 eine eigene Quellenkennung zugeordnet, die die jeweilige Videokamera und den dieser Videokamera zugehörigen Eingangsport individuell kennzeichnet. Diese Zuordnung erfolgt vorzugsweise bereits bei der Installation oder der Inbetriebnahme des Systems und wird entweder von einer Person manuell vorgenommen oder erfolgt automatisch durch das Videomanagementsystem VM. Diese Quellenkennungen und deren Zuordnungen zur jeweiligen Videokamera 1, 2, 3 bis n werden sowohl für jeden Videoeingangsport in den Videocodern C1, C2, C3 als auch im Videomanagementsystem VM nichtflüchtig hinterlegt, wenn es statische Quellenkennungen sind. Des weiteren informiert das Videomanagementsystem VM auch die Decoder D1 bis Dx je zugeordnetem Videoausgangsport über die Quellenkennungen und deren Zuordnung zur jeweiligen Videokamera. Auch im Decoder D1 bis Dx werden diese Quellenkennungen videoportspezifisch mit deren Zuordnung zur jeweiligen Videokamera nichtflüchtig hinterlegt, wenn es statische Quellenkennungen sind.

Des Weiteren weisen die Coder C1, C2, C3, die Decoder D1 bis Dx, das Videomanagementsystem VM und die Leitzentrale PCU jeweils eine Echtzeituhr auf, die eine Echtzeitinformation bereitstellt. Diese Echtzeitinformation wird durch NTP Zeitserver synchronisiert.

Darüber hinaus wird vorzugsweise bereits bei der Installation oder der Inbetriebnahme des Systems jedem Monitor des Systems eine eigene Kennung zugeordnet, die nachfolgend stets als zusätzliche Kennung bezeichnet wird. Diese zusätzlichen Kennungen, von denen jede einen der Monitore kennzeichnet und z.B. eine eindeutige Empfangsadresse darstellt, werden sowohl im MPEG-Decoder D1 bis Dx dem jeweiligen Videoausgangsport zugeordnet als auch im Videomanagementsystem VM dem jeweiligen Monitor zugeordnet als auch im MPEG-Coder C1 bis C3 einem oder mehreren Videoeingangsports zugeordnet, nichtflüchtig hinterlegt und stehen deshalb ebenso wie die oben genannten Quellenkennungen zusätzlich für den späteren einfacheren und sicheren Betrieb des Systems zur Verfügung, da in keinem Coder, Decoder oder Steuerung oder auch nur Teilen davon die Sende/Empfangsadressen gewechselt werden müssen. Die jeweiligen Videoquellendatenströme der Coder müssen nur noch aktiviert/deaktiviert werden. Dem Decoder muss entsprechend der Zuordnung zum Monitor nur noch die korrekte Soll-Quellenkennung bei unterschiedlichen Videoquellen auf dem gleichen Monitor durch das Videomanagement zur entsprechenden Auswertung zur Verfügung gestellt werden. Um zur Entlastung des Netzwerkes beizutragen sind Datenströme der Coder, die weder aufgezeichnet noch live betrachtet werden, in der Regel abgeschaltet. Aber auch aktive Aufschaltungen mit gleicher Monitoradresse bzw. gleicher Empfangsadresse des Videodecoders aber unterschiedlicher Videoquellenkennung machen gemäß der Vorteile der Erfindung aufgrund der Auswertung der Videoquellenkennung im Decoder keine Videoausgabeprobleme. Es wird immer nur die Videoquelle angezeigt, die auch die Erwartung korrekte Videoquelle am Videoausgang des Decoders erfüllt.

Zur Einleitung einer Übertragung der von den Videokameras 1, 2, 3-n bereitgestellten Videosignale an die Monitore M1 bis Mx wird zunächst vom Leitsystem PCU festgelegt, welche Videokamera welchem Monitor zugeordnet werden soll. Beispielsweise trifft die Leitstelle PCU die Anordnung, dass die Videokamera 1 dem Monitor M1 und die Videokamera 2 dem Monitor Mx zugeordnet werden soll. Diese Zuordnung wird vom Leitsystem PCU an das Videomanagementsystem VM weitergeleitet. Dann erfolgt über das Videomanagementsystem auch die Aufschaltung der jeweiligen Kamera 1 über den jeweiligen Coder auf den jeweiligen Monitor über den jeweiligen Decoder D1 bis Dx. Diese Zuordnung kann von der Leitstelle im Betrieb der Anlage bei Bedarf verändert werden.

Ist diese Zuordnung getroffen, dann setzt der Coder C1 bis C3 im Rahmen der Codierung des von der jeweiligen Videokamera über den zugehörigen Eingangsport gelieferten Videosignals die der Videokamera zugehörige Quellenkennung und andere Kennungen in das codierte Signal ein. Vorzugsweise erfolgt dieses Einsetzen bei einer MPEG Codierung in die MPEG-Userdaten des MPEG-Signals. Dieser Datenteil enthält demzufolge kundenspezifische Nutzerdaten, die vom MPEG-Standard bereits für Nicht-Standardanwendungen vorgesehen wurden.

Diese MPEG-Userdaten beinhalten z.B. eine eindeutige verschlüsselte Videoquellenkennung, Videoportnummern und weitere allgemeinere Kennungen wie MAC-Adressen und IP-Adressen, usw. Eine MAC-Adresse in Verknüpfung mit der Videoportnummer eines Mehrkanalencoders ergibt ebenfalls eine eindeutige statische Quellenkennung und kann als weitere Kennung genutzt werden. Diese Kennung kann aber bei dynamischen Kamerawechseln bzw. Blickrichtungswechseln oder Videoeigenschäftsänderungen nicht genutzt werden. Hierfür ist aber die Videoquellenkennung ebenfalls geeignet. Eine zusätzliche Kennung, bei der es sich um eine den jeweils zugeordneten Monitor spezifizierende Kennung handelt, kann ebenfalls in diesen MPEG Userdaten eingefügt werden. Ferner setzt der Coder C1 bis C3 auch eine Echtzeitinformation in den Datenstrom ein. Für eine einfache Echtzeitauswertung auf der Empfängerseite werden die Quellenechtzeitinformationen z.B. mit dem RTP Erweiterungsheader oder ebenfalls mit den MPEG User Daten übertragen. Für die SSRC(Synchronization Source)Zufallskennung jedes MPEG Datenstromes ist bereits z.B. der Standard RTP-Header vorgesehen.

Die im vorstehenden Sinne codierten Videosignale der Videokameras 1, 2, 3-n werden in den Codern C1 bis C3 in Datenströme gepackt und an das Netzwerk N weitergeleitet.

Dieses Netzwerk überträgt die Datenströme, welche digitale Videosignale aufweisen, an die Decoder D1 bis Dx. In diesen erfolgt eine Auswertung des empfangenen Datenstromes unter Verwendung der im Decoder vorliegenden Informationen. Hierzu gehört die erwartete SOLL-Videoquellenkennung. Diese kann statisch oder dynamisch im Decoder vorgegeben werden und enthält jeweils die entsprechenden Kennungen der Kamera 1,2 und 3 bis n. Es können auch weitere Kennungen wie die zu erwartende Sende MAC-Adresse und Sende-Videoportnummer oder zusätzliche Kennungen wie Monitor-Empfangsadressen im Decoder verglichen und ausgewertet werden.

Bei dynamischen Kennungen erhält der Decoder D1-Dx die Kennungen für den Identitätsvergleich über das Videomanagementsystem VM. Der Coder kann dynamische Kennungen vom Videomanagementsystem VM bekommen, aber auch automatisch und unabhängig von Systemkomponenten selbst. Dies erhöht die Sicherheit einer korrekten Videoquellendarstellung. Beispielsweise können dynamische Kennungen wie Videoauflösung, Bildrate, Bildqualität, Datenrate oder andere Videocodereigenschaften direkt vom Videocoder selbst als Quellenkennung in den Datenstrom gepackt werden.

Bei separater Kamera können auch Eigenschaften der Kamera über die Datenschnittstelle p1 bis p3 als automatische Kennung verwendet werden. Hierzu gehört neben den Videoeigenschaften beispielsweise auch die Seriennummer der Kamera. Des Weiteren können über die Datenschnittstellen der Coder auch automatische Kennungen von Zoom, Fokus und Blickrichtung von Kameras in Schwenkneigeköpfen übertragen werden und in den Datenstrom des Coders gepackt werden.

Ferner weisen auch die Decoder D1-Dx eine Echtzeituhr auf, die eine Echtzeitinformation bereitstellt.
Beim Empfang des über das Netzwerk N übertragenen Datenstromes überprüft der jeweilige Decoder D1 bis Dx , ob sich die im Datenstrom enthaltene Echtzeitinformation von der im Decoder vorliegenden Echtzeitinformation um weniger als eine maximal zulässige Zeitdifferenz unterscheidet. Neben der Latenzzeit des Coders ist aber auch die Übertragung und Decodierung des MPEG-Videosignal verzögerungsbehaftet. Übertragungsnetzwerke wie WLAN, ISDN oder das Internet werden höhere Verzögerungszeiten haben, so dass vorteilhafterweise die maximale Zeitabweichung zwischen der Quellen UTC und der Empfänger UTC einstellbar ist oder sogar der Zeitvergleich im Empfänger/Decoder abschaltbar ausgelegt wird. Die Zeitvergleichsauswertung und die Quellenkennungsauswertung können auch verknüpft werden, so dass beide richtigen Auswertungen für eine Freigabe notwendig sind.

Stimmt also jeweils der Quellenkennungsvergleich überein und ist die Quellenzeit innerhalb der vorgegebenen Toleranz, dann decodiert jeweils der Decoder D1 bis Dx bei einer ersten Ausführungsform der Erfindung das zugehörige Video-Signal und stellt es an demjenigen Ausgangsport V1 bis Vx des jeweils zugehörigen Decoders D1 bis Dx zur Verfügung, welcher mit dem zugeordneten Monitor M1 bis Mx verbunden ist. Bei fehlender Korrelation wird am jeweiligen Videoausgangsport des Decoders kein Bild oder ein Testbild mit der Warnung "NO VSID" ausgegeben.

Gemäß einer zweiten, verbesserten Ausführungsform werden auch Datenströme mit mehrfach identischen Empfangsadressen überprüft und die gültige Empfangsadresse zur Decodierung weiter geleitet. Mit Hilfe der standardisierten Zufallskennung SSRC ist im Decoder zwar ein "Source Collision" Handling möglich, aber eine Unterscheidung, welches der korrekte Datenstrom ist, ist nicht möglich.
Mit Hilfe der Videoquellenkennung kann nun der richtige Datenstrom automatisch vom Decoder ausgefiltert werden. Somit können Projektierungsfehler mit Mehrfachvergabe von gleichen Videosendeadressen, oder auch Fremddatenströme oder Sabotagedatenströme, die die Bildwiedergabe am Empfänger/Decoder beinträchtigen würden, ausgeschlossen werden. Auch hier wird dann das Videosignal nur nach positivem Auswertungsvergleich gemäß der ersten Ausführungsform an den jeweils zugeordneten Monitor ausgegeben.

Gemäß einer dritten, ebenfalls verbesserten Ausführungsform überprüft der Decoder zusätzlich zur ersten Ausführungsform, ob die im empfangenen codierten Signal enthaltene zusätzliche Kennung, die den zugeordneten Monitor individuell kennzeichnet, mit der zugehörigen, im Decoder vorhandenen zusätzlichen Kennung übereinstimmt. Nur dann, wenn dies auch der Fall ist, wird bei dieser dritten Ausführungsform das decodierte Videosignal an den jeweils zugeordneten Monitor ausgegeben.

Gemäß einer vierten, weiter verbesserten Ausführungsform überprüft der Decoder zusätzlich zur ersten Ausführungsform, ob die bei der zweiten Ausführungsform genannte Datenstromausfilterung und die bei der dritten Ausführungsform genannte zusätzliche Kennung mit der jeweils zugehörigen, im Decoder vorliegenden weiteren bzw. zusätzlichen Kennung übereinstimmen. Nur wenn dies auch der Fall ist, wird bei dieser vierten Ausführungsform das decodierte Videosignal an den jeweils zugeordneten Monitor ausgegeben.

Vorzugsweise wird die genannte Quellenkennung verschlüsselt über das Netzwerk N übertragen. Dies hat den Vorteil, dass unbefugte Dritte, die ebenfalls Zugang zum Datenstrom haben, aus dem Datenstrom keine Rückschlüsse auf die jeweilige Quellenkennung ziehen können. Die Sicherheit vor unerwünschten Manipulationen im Bereich des Netzwerks N wird dadurch weiter erhöht. Auf der Empfänger-/Decoderseite wird die empfangene verschlüsselte Quellenkennung wieder entschlüsselt und man kann den Istwert dann mit dem Sollwert des Empfängers/Decoders vergleichen und anderen Systemen den Istwert für einen unabhängigen Vergleich zur Verfügung stellen.

Gemäß einer vorteilhaften Ausgestaltung der Erfindung wird im Falle einer Abschaltung der Auswertung im Decoder und Weiterleitung eines decodierten Videosignals an einen Monitor zusätzlich eine Einblendung auf dem Display des Monitors dargestellt, welche sowohl die im Datenstrom übertragene IST-Quellenkennungen als auch die im Decoder vorliegende SOLL-Quellenkennungen zeigt. Stimmen diese auf dem Display des Monitors dargestellten Quellenkennungen überein, dann erkennt das Bedienpersonal, dass die Zuordnung zwischen Videokamera und Monitor korrekt ist bzw. eine korrekte Videosignalübertragung vorliegt. Weichen hingegen die beiden auf dem Display des Monitors dargestellten Quellenkennungen voneinander ab, dann erkennt das Bedienpersonal, dass eine fehlerhafte Videosignalübertragung vorliegt und leitet geeignete Gegenmaßnahmen in die Wege.

Stimmen die im Decoder miteinander verglichenen Kennungen und Echtzeitinformationen nicht überein, dann wird kein Kamerasignal an den jeweiligen Monitor weitergeleitet. Stattdessen kann eine Einblendung eines alphanumerischen und/oder graphischen Fehlersignals auf dem Display des jeweiligen Monitors vorgenommen werden.

Eine vorteilhafte Weiterbildung der Erfindung besteht darin, die im Decoder D1 bis Dx aus dem empfangenen Datenstrom separierten Kennungen bzw. Echtzeitinformationen der Leitstelle PCU über die Datenschnittstellen ID1 bis IDx zuzuführen und in der Leitstelle PCU einer Kontrollprüfung dahingehend zu unterziehen, ob die jeweilige Zuordnung zwischen Videokamera und Monitor korrekt ist oder nicht. Vorzugsweise ist mit der Leitstelle ein Display PCUM verbunden, auf welchem eine Anzeige erfolgt, die eine korrekte oder fehlerhafte Videosignalübertragung signalisiert. In vorteilhafter Weise wird eine fehlerhafte Videosignalübertragung vom Leitsystem PCU zusätzlich akustisch signalisiert und eine direkte Steuerung der Monitoraufschaltung über Schalter S1 bis Sx vorgenommen.

Die Erfindung betrifft nach alledem ein Verfahren zur sicheren Übertragung von Videosignalen von mehreren Videokameras über ein Netzwerk an mehrere Monitore. Bei diesem Verfahren besteht eine hohe Sicherheit dahingehend, dass ein von einer vorgegebenen Videokamera bereitgestelltes Echtzeitvideosignal auf einem dieser Videokamera zugeordneten Monitor dargestellt wird. Manipulationen insbesondere im Bereich des Netzwerks N werden empfangseitig sicher erkannt und führen insbesondere dazu, dass auf dem jeweiligen Monitor entweder gar kein Videosignal oder lediglich eine Fehlermeldung angezeigt wird. Eine zusätzliche Kontrolle dahingehend, ob eine korrekte Videosignalübertragung vorliegt oder nicht, kann in der Leitstelle erfolgen, wobei der Leitstelle aus dem empfangenen Datenstrom separierte Echtzeitinformationen und Kennungen zugeführt werden und in der Leitstelle ein Vergleich der separierten Daten mit jeweils zugehörigen Solldaten erfolgt.

Als Kennungen dienen in vorteilhafter Weise eine Quellenkennung, die der jeweiligen Videoquelle individuell fest zugeordnet ist, weitere dynamische Kennungen, die dem Bild bzw dessen Eigenschaften selbst zugeordnet sind, und eine zusätzliche Kennung, die den der jeweiligen Kamera von der Leitstelle zugeordneten Monitor individuell kennzeichnet. Diese Kennungen werden in das zu übertragende digitalisierte Video-Signal eingesetzt, vorzugsweise bei einer MPEG Übertragung in einen erweiterten Header oder die MPEG User Daten des jeweiligen MPEG-Signals, und in Form eines MPEG-Datenstromes über das Netzwerk übertragen. Des Weiteren wird eine Echtzeitinformation in das zu übertragende codierte Signal eingesetzt.

Empfangsseitig erfolgt in einem Decoder ein Vergleich der aus dem Datenstrom separierten Kennungen mit im Decoder vorliegenden Sollwerten. Nur bei positivem Vergleichsergebnis erfolgt eine Ausgabe eines decodierten Videosignals auf dem Display des jeweils zugeordneten Monitors.

Ein Verfahren gemäß der Erfindung kann in vorteilhafter Weise im Zusammenhang mit Überwachungssystemen in Bahnhöfen, Flughäfen, Kaufhäusern, Fabriken, Banken, Museen, U-Bahnen, auf freien Zugstrecken, etc., verwenden werden. Eventuelle Manipulationen oder Fehler in der Videosignalübertragung, insbesondere im Bereich des Netzwerkes N, werden mit hoher Sicherheit erkannt.

In Figur 2 ist eine weniger aufwendige einstufige Videoquellenidentifikation dargestellt. Der Benutzer OP steuert hier die Videoübertragung direkt über das Videomanagementsystem VM. Weitere Unterschiede zu Figur 1: Bei dem Coder handelt sich um einen Mehrkanal-Coder C mit einer LAN-Schnittstelle. Der NTP-Zeitserver ist in das Videomanagement VM integriert. Bei dem Decoder handelt es sich um einen Mehrkanal-Decoder D.

Die Übertragung und Videoquellenauswertung für die Analogmonitore M1 und M2 ist identisch wie in Figur 1. Eine zusätzliche unabhängige Auswertung der Videoquellenkennungen für die Abschaltung der Monitore ist entfallen. Neu ist hierbei insbesondere die zusätzliche sichere Live Videoquellendarstellung auf dem PC Monitor PM1, sowie die sichere Live-Videoquellenaufzeichnung auf einem Netzwerkvideorecorder NVR. Auch der NVR besitzt wie das Videomanagementsystem VM eine Echtzeituhr, die über einen NTP-Zeitserver synchronisiert wird.

Das Videomanagementsystem sowie der NVR sind wie die Coder und Decoder über ein Netzwerk N verbunden.

Für die Live-Darstellung am PC-Monitor muss das empfangene MPEG-Videosignal durch einen PC Decoder in Hardware oder Software decodiert werden und anschließend auf dem PC Monitor PM1 dargestellt werden.

Durch einen Vergleich der empfangenen Videoquellenkennungen und der Echtzeit mit den dem Videomanagementsystem bekannten Sollwerten kann auch hier eine PC-Monitordarstellung nur dann erfolgen, wenn dieser Vergleich korreliert.

Für den Mehrfachempfang gleicher Sendeadressen kann auch hier mit Hilfe der Videokennungen der entsprechend gültige Datenstrom herausgefiltert werden und Störungen des Bildes unterdrückt werden.

Der NVR muss das empfangene MPEG-Videosignal für die Aufzeichnung nicht decodieren. Die Aufzeichnung erfolgt vorteilhafterweise mit den Videokennungen und der Echtzeitkennung. Damit ist auch nachträglich eine genaue Videoquellenzuordnung und der Zeitpunkt der Aufzeichnung fest mit dem Videoinhalt verknüpft.

Der NVR bekommt für eine Aufzeichnung vom Videomanagement VM die Empfangsadresse des Datenstroms mitgeteilt, welchen er aufzeichnen soll.

Hiermit wird zwar jetzt nicht sichergestellt, dass die richtige Videoquelle aufgezeichnet wird, aber der aufgezeichnete Datenstrom enthält alle dem Video zugeordneten Quellenkennungen und die Aufzeichnungszeit, so dass bei der Wiedergabe bei einem Videokennungsvergleich der Aufzeichnung mit einer Sollkennung nur bei korrektem Vergleich das Videobild auf dem PC Monitor PM1 oder den Analogmonitoren M1 und M2 dargestellt wird. Bei dieser "Konservenwiedergabe" wird der Zeitvergleich im Decoder (VM oder D) sinnvollerweise nicht genutzt.

Eine Erweiterung besteht darin, dem NVR neben der Empfangsadresse auch die Videokennungen durch das Videomanagementsystem VM mitzuteilen, um schon bei der Aufzeichnung einen Kennungsvergleich durchzuführen und nicht korrekte Videoquellen gar nicht aufzuzeichnen.

Bei den vorstehend beschriebenen Ausführungsbeispielen wurde stets eine MPEG-Codierung der Videosignale verwendet. Die Erfindung ist aber auch bei einer Übertragung von digital codierten Videosignalen allgemein anwendbar. Des Weiteren können als Decoder entweder Hardware-Decoder oder Software-Decoder verwendet werden. Gemäß einer vorteilhaften Weiterbildung der Erfindung können videoquellensseitig auch bewegte Textzeichen in das zu übertragende Videobild eingesetzt werden. Dies erlaubt auf der Empfangs- bzw. Monitorleiste eine Erkennung von Datenstromunterbrechungen und eine Unterscheidung von Speicherbildern und Echtheitsbildern.

Eine andere vorteilhafte Weiterbildung der Erfindung besteht darin, das oben beschriebene Verfahren auch oder zusätzlich im Zusammenhang mit Audioquellen oder anderen Datenquellen zu verwenden.

Als Quellenkennungen können in vorteilhafter Weise auch die Seriennummern der Kameras oder der Coder, Bezeichnungen der Kameraorte oder dynamische Kamerapositionen verwendet werden. Für eine Quellenidentifizierung am Empfangsort können zur Erhöhung der Sicherheit weitere Quellenmerkmale Verwendung finden. Dazu gehören beispielsweise feste Coder MAC- und IP-Adressen sowie feste Videosendeadressen (Unicast/Multicast) der Coder. Zusätzliche Quellenkennungen sind auch Metadaten wie Orts-Zeitinformationen, beispielsweise Positionsrückmeldungen eines Schwenkneigekopfes oder eines Zoomobjektives, wobei diese Daten an die Kameras bzw. die Coder gegeben und am Empfangsort mit den jeweiligen Vorgaben verglichen werden können.

## Patentansprüche

1. Verfahren zur Übertragung von Videosignalen von mehreren Videoquellen (1, 2, 3-n) in Form von digital codierten Videosignalen über ein Netzwerk (N) an mehrere Monitore (M1 bis Mx), wobei die von den Videoquellen bereitgestellten Videosignale mittels Eingangsports (P1, P2, P3) aufweisender Video-Coder (C1 bis C3) digital codiert werden, die digital codierten Videosignale in Form von Datenströmen über das Netzwerk übertragen werden und die über das Netzwerk übertragenen Datenströme Decodern (D1 bis Dx) zugeführt werden, an deren Ausgangsports (V1 bis Vx), jeweils ein Monitor M1 bis Mx angeschlossen ist, wobei
- jeder Videoquelle eine eigene Quellenkennung zugeordnet wird,
- die Quellenkennung bei der Video-Codierung des von der jeweiligen Videoquelle bereitgestellten Videosignals in den zugehörigen Video-Datenstrom eingesetzt wird,
- in den über das Netzwerk zu übertragenden Video-Datenstrom eine Echtzeitinformation eingesetzt wird,
- aus dem über das Netzwerk übertragenen Video-Datenstrom die Echtzeitinformation separiert und mit einer im Video-Decoder vorliegenden Echtzeitinformation verglichen wird,
- aus dem über das Netzwerk übertragenen Video-Datenstrom im Video-Decoder die im Datenstrom des codierten Videosignals enthaltenen Quellenkennungen separiert und mit einer im Video-Decoder vorliegenden Quellenkennung verglichen werden und
- der Video-Decoder das decodierte Videosignal nur dann an einen vorgegebenen Monitor weiterleitet, wenn die miteinander verglichenen Quellenkennungen übereinstimmen und die miteinander verglichenen Echtzeitinformationen um weniger als eine zugelassene Zeitdifferenz voneinander abweichen.

2. Verfahren nach Anspruch 1, **dadurch gekennzeichnet, dass** die Quellenkennungen den Videoquellen fest zugeordnet und im Videocoder (C1 bis C3) nichtflüchtig hinterlegt werden.

3. Verfahren nach Anspruch 2, **dadurch gekennzeichnet, dass** die Quellenkennungen und ihre Zuordnungen zu den Videoquellen in einem Videomanagementsystem (8) hinterlegt werden und dass mittels des Videomanagementsystems (VM) eine Aktivierung einer der Videoquellen und eine Zuordnung der aktivierten Videoquelle zu einem der Monitore vorgenommen wird.

4. Verfahren nach Anspruch 3, **dadurch gekennzeichnet, dass** die Quellenkennungen und deren Zuordnungen zu den Videoquellen vom Managementsystem (VM) an den Video-Decoder (D1 bis Dx) übertragen und im Video-Decoder hinterlegt werden.

5. Verfahren nach einem der vorhergehenden Ansprüche, **dadurch gekennzeichnet, dass** im Videocoder und im Videodecoder Videoquellenkennungen dynamisch vergeben werden.

6. Verfahren nach einem der vorhergehenden Ansprüche, **dadurch gekennzeichnet, dass** die Quellenkennung in verschlüsselter Form über das Netzwerk (N) übertragen wird.

7. Verfahren nach einem der vorhergehenden Ansprüche, **dadurch gekennzeichnet, dass** dem Videomanagementsystem (VM) von einer Leitstelle (PCU) vorgegeben wird, welche Videoquelle aktiviert werden soll und welcher Monitor der aktivierten Videoquelle zugeordnet werden soll und dass die aus dem übertragenen Video-Datenstrom separierten Quellenkennungen und Echtzeitinformationen an die Leitstelle (PCU) übertragen werden.

8. Verfahren nach Anspruch 7, **dadurch gekennzeichnet, dass** die aus dem übertragenen Video-Datenstrom separierten Quellenkennungen und Echtzeitinformationen vom Decoder (D1 bis Dx) über Datenschnittstellen (ID1 bis IDx) an die Leitstelle (PCU) übertragen werden, in der Leitstelle mit den Sollwerten verglichen werden und auf einem Display (PCUM) des Leitsystems eine Anzeige erfolgt, über welche eine korrekte Videosignalübertragung oder eine fehlerhafte Videosignalübertragung signalisiert wird.

9. Verfahren nach Anspruch 8, **dadurch gekennzeichnet, dass** das Leitsystem im Falle einer fehlerhaften Videosignalübertragung eine Weiterleitung der nicht gewünschten Videosignale zum jeweiligen Monitor unterbindet.

10. Verfahren nach einem der vorhergehenden Ansprüche, **dadurch gekennzeichnet, dass** auf einem vorgegebenen Monitor (M1 bis Mx) eine alphanumerische und/oder optische Darstellung einer Einblendung vorgenommen wird, die eine korrekte oder fehlerhafte Videosignalübertragung signalisiert.

11. Verfahren nach einem der vorhergehenden Ansprüche, **dadurch gekennzeichnet, dass** aus Videodatenströmen mit gleichen Videosendeadressen der korrekt gekennzeichnete Videodatenstrom als gültiger Videodatenstrom herausgefiltert wird.

12. Verfahren nach einem der vorhergehenden Ansprüche, **dadurch gekennzeichnet, dass** unterschiedlichen Videoeigenschaften einer Videoquelle unterschiedliche Videoquellenkennungen zugeordnet werden.

13. Verfahren nach einem der vorhergehenden Ansprüche, **dadurch gekennzeichnet, dass** die Videoquellenkennungen nicht mit jedem Bild, sondern nur mit jedem n-ten Bild übertragen werden.

14. Verfahren nach einem der vorhergehenden Ansprüche, **dadurch gekennzeichnet, dass** eine zusätzliche dynamische bildfrequente Live-Kennung von übertragenen Videozeilen einer Videoquelle übertragen wird, wobei diese dynamische Kennung im Videodecoder ausgewertet wird und wobei dann, wenn sich der Inhalt der Videozeilen nicht mehr ändert, innerhalb einer vorgegebenen Zeit kein Videosignal mehr an den jeweils zugehörigen Monitor weitergegeben wird.

15. Verfahren einem der vorhergehenden Ansprüche, **dadurch gekennzeichnet, dass** dynamische Quellenkennungen von Datenschnittstellen zwischen Coder und externen Quellen vergeben werden.

16. Verfahren einem der vorhergehenden Ansprüche, **dadurch gekennzeichnet, dass** weiteren Quellen, insbesondere Audioquellen, ebenfalls Quellenkennungen zugeordnet werden und dass diese Quellenkennungen ebenfalls mit jeweils zugehörigen Sollwerten verglichen werden.

17. Verfahren einem der vorhergehenden Ansprüche, **dadurch gekennzeichnet, dass** den Videoausgangsports der Decoder jeweils ein Kontakt (o1, ox) zugeordnet wird, der nur beim Erkennen einer korrekten Videosignalübertragung aktiv ist.

18. Verfahren einem der vorhergehenden Ansprüche, **dadurch gekennzeichnet, dass** der über das Netzwerk übertragene Video-Datenstrom mittels eines PC-Decoders decodiert wird und bei korrekter Videosignalübertragung eine Darstellung der decodierten Videosignale auf einem PC-Monitor (PM1) erfolgt.

19. Verfahren einem der vorhergehenden Ansprüche, **dadurch gekennzeichnet, dass** der über das Netzwerk übertragene Video-Datenstrom an einen Netzwerkvideorecorder (NVR) geleitet wird und mittels des Netzwerkvideorecorders digital codierte Videosignale inklusive Quellenkennungen und Echtzeitinformationen aufgezeichnet werden.

20. Verfahren einem der Ansprüche 1 bis 18, **dadurch gekennzeichnet, dass** der über das Netzwerk übertragene Video-Datenstrom an einen Netzwerkvideorecorder (NVR) geleitet wird und mittels des Netzwerkvideorecorders nur dann aufgezeichnet wird, wenn miteinander verglichene Quellenkennungen übereinstimmen und miteinander verglichene Echtzeitinformationen um weniger als eine zugelassene Zeitdifferenz voneinander abweichen.

## Claims

1. Method for the transfer of video signals from multiple video sources (1, 2, 3-n) in the form of digitally coded video signals over a network (N) to multiple monitors (M1 to Mx), wherein the video signals provided by the video sources are digitally encoded by means of video coders (C1 to C3) comprising input ports (P1, P2, P3), the digitally coded video signals are transmitted over the network by means of data streams, and the data streams transmitted over the network are fed to decoders (D1 to Dx), to each of whose output ports (V1 to Vx) a monitor M1 to Mx is connected, wherein
- each video source is assigned its own source identifier,
- the source identifier is used to encode the video signal provided by each video source into the associated video data stream,
- real-time information is inserted into the video data stream to be transmitted via the network,
- the real-time information is separated from the video data stream to be transmitted via the network and compared with real-time information present in the video decoder,
- the source identifiers contained in the data stream of the encoded video signal are separated from the video data stream transmitted over the network in the video decoder and compared with a source identifier present in the video decoder,
- the video decoder transmits the decoded video signal to a predetermined monitor only if the compared source identifiers match and the compared real-time information differs by less than an allowed time difference.

2. Method according to claim 1, **characterized in that** the source identifiers are permanently assigned to the video sources and stored non-volatile in the video encoder (C1 to C3) .

3. Method according to claim 2, **characterized in that** the source identifiers and their assignments to the video sources are stored in a video management system (8), and an activation of one of the video sources and an assignment of the activated video source to one of the monitors is performed by means of the video management system (VM).

4. Method according to claim 3, **characterized in that** the source identifiers and their assignments to the video sources are transmitted from the management system (VM) to the video decoder (D1 to Dx) and stored in the video decoder.

5. Method according to one of the preceding claims, **characterized in that** video source identifiers are assigned dynamically in the video coder and in the video decoder.

6. Method according to one of the preceding claims, **characterized in that** the source identifier is transmitted in encrypted form over the network (N).

7. Method according to one of the preceding claims, **characterized in that** the video management system (VM) is instructed by a control center (PCU) which video source is to be activated and which monitor is to be assigned to the activated video source and that the source identifiers separated from the transmitted video data stream and real-time information are transmitted to the control center (PCU).

8. Method according to claim 7, **characterized in that** the source identifiers separated from the transmitted video data stream and real-time information are transmitted from the decoder (D1 to Dx) via data interfaces (ID1 to IDx) to the control center (PCU), are compared with the nominal values in the control center and an indication is shown on a display (PCUM) of the control system via which correct video signal transmission or faulty video signal transmission is signalized.

9. Method according to claim 8, **characterized in that** the control system prevents the unwanted video signals from being forwarded to the respective monitor in case of a faulty video signal transmission.

10. Method according to one of the preceding claims, **characterized in that** an alphanumeric and/or optical display of a fade-in is made on a given monitor (M1 to Mx), which signalizes a correct or faulty video signal transmission.

11. Method according to one of the preceding claims, **characterized in that** the correctly marked video stream is filtered out as a valid video stream from video streams with the same video send addresses.

12. Method according to one of the preceding claims, **characterized in that** different video properties of a video source are assigned different video source identifiers.

13. Method according to one of the preceding claims, **characterized in that** the video source identifiers are not transmitted with each image but only with each nth image.

14. Method according to one of the preceding claims, **characterized in that** an additional dynamic image-frequency live identifier of transmitted video lines of a video source is transmitted, wherein that dynamic identifier is analyzed in the video decoder and wherein, when the content of the video lines no longer changes, no more video signal is transmitted to the respective associated monitor within a predetermined time.

15. Method according to one of the preceding claims, **characterized in that** dynamic source identifiers of data interfaces are assigned between coder and external sources.

16. Method according to one of the preceding claims, **characterized in that** further sources, in particular audio sources, are also assigned source identifiers and **in that** these source identifiers are also compared with respectively associated nominal values.

17. Method according to one of the preceding claims, **characterized in that** the video output ports of the decoders are each assigned a contact (o1, ox) which is only active when a correct video signal transmission is detected.

18. Method according to one of the preceding claims, **characterized in that** the video data stream transmitted via the network is decoded by means of a PC decoder and, if the video signal transmission is correct, the decoded video signals are displayed on a PC monitor (PM1).

19. Method according to one of the preceding claims, **characterized in that** the video data stream transmitted via the network is routed to a network video recorder (NVR) and digitally coded video signals including source identifiers and real-time information are recorded by means of the network video recorder.

20. Method according to one of the claims 1 to 18, **characterized in that** the video data stream transmitted via the network is routed to a network video recorder (NVR) and is recorded by means of the network video recorder only if compared source identifiers match and compared real-time information differs from one another by less than a permitted time difference.

## Revendications

1. Procédé de transmission de signaux vidéo de plusieurs sources vidéo (1, 2, 3-n) se présentant sous la forme de signaux vidéo codés numériquement à plusieurs moniteurs (M1 à Mx) par l'intermédiaire d'un réseau (N), dans lequel les signaux vidéo fournis par les sources vidéo sont codés numériquement au moyen de codeurs vidéo (C1 à C3) présentant des ports d'entrée (P1, P2, P3), les signaux vidéo codés numériquement sont transmis sous la forme de flux de données par l'intermédiaire du réseau et les flux de données transmis par l'intermédiaire du réseau sont amenés à des décodeurs (D1 à Dx), aux ports de sortie (V1 à Vx) desquels est raccordé respectivement un moniteur (M1 à Mx),
dans lequel
- un identifiant de source propre est affecté à chaque source vidéo,
- l'identifiant de source est inséré dans le flux de données vidéo associé lors du codage vidéo du signal vidéo fourni par la source vidéo respective,
- une information temps réel est insérée dans le flux de données vidéo à transmettre par l'intermédiaire du réseau,
- l'information temps réel est séparée du flux de données vidéo transmis par l'intermédiaire du réseau et comparée à une information temps réel présente dans le décodeur vidéo,
- les identifiants de source contenus dans le flux de données du signal vidéo codé sont séparés du flux de données vidéo dans le décodeur vidéo transmis par l'intermédiaire du réseau et comparés à un identifiant de source présent dans le décodeur vidéo et
- le décodeur vidéo ne transfère le signal vidéo décodé à un moniteur prédéfini que lorsque les identifiants de source comparés les uns aux autres concordent et que les informations temps réel comparées l'une à l'autre diffèrent l'une de l'autre de moins d'une différence de temps admise.

2. Procédé selon la revendication 1, **caractérisé en ce que** les identifiants de source sont affectés de façon permanente aux sources vidéo et sont mis en mémoire de manière non volatile dans le codeur vidéo (C1 à C3).

3. Procédé selon la revendication 2, **caractérisé en ce que** les identifiants de source et leurs affectations aux sources vidéo sont mis en mémoire dans un système de gestion vidéo (8) et **en ce qu'**une activation d'une des sources vidéo et une affectation de la source vidéo activée à l'un des moniteurs sont réalisées au moyen du système de gestion vidéo (VM).

4. Procédé selon la revendication 3, **caractérisé en ce que** les identifiants de source et leurs affectations aux sources vidéo sont transmis par le système de gestion (VM) au décodeur vidéo (D1 à Dx) et mis en mémoire dans le décodeur vidéo.

5. Procédé selon l'une quelconque des revendications précédentes, **caractérisé en ce que** les identifiants de source vidéo sont attribués de façon dynamique dans le codeur vidéo et dans le décodeur vidéo.

6. Procédé selon l'une quelconque des revendications précédentes, **caractérisé en ce que** l'identifiant de source est transmis sous forme chiffrée par l'intermédiaire du réseau (N).

7. Procédé selon l'une quelconque des revendications précédentes, **caractérisé en ce qu'**un centre de contrôle (PCU) spécifie au système de gestion vidéo (VM) quelle source vidéo il convient d'activer et à quel moniteur il convient d'affecter la source vidéo activée et **en ce que** les identifiants de source séparés du flux de données vidéo transmis et les informations temps réel sont transmis au centre de contrôle (PCU).

8. Procédé selon la revendication 7, **caractérisé en ce que** les identifiants de source séparés du flux de données vidéo transmis et les informations temps réel sont transmis par le décodeur (D1 à Dx) au centre de contrôle (PCU) par l'intermédiaire d'interfaces de données (ID1 à IDx), sont comparés aux valeurs théoriques dans le centre de contrôle et un affichage permettant de signaler une transmission correcte des signaux vidéo ou une transmission incorrecte des signaux vidéo s'effectue sur un écran (PCUM) du système de contrôle.

9. Procédé selon la revendication 8, **caractérisé en ce que** le système de contrôle, dans le cas d'une transmission incorrecte des signaux vidéo, empêche un transfert des signaux vidéo non souhaités au moniteur respectif.

10. Procédé selon l'une quelconque des revendications précédentes, **caractérisé en ce qu'**une représentation alphanumérique et/ou optique d'une incrustation, laquelle signale une transmission correcte ou incorrecte des signaux vidéo, est réalisée sur un moniteur (M1 à Mx) spécifié.

11. Procédé selon l'une quelconque des revendications précédentes, **caractérisé en ce que** le flux de données vidéo identifié comme étant correct est filtré en tant que flux de données vidéo valide du flux de données vidéo présentant des adresses d'envoi de vidéo identiques.

12. Procédé selon l'une quelconque des revendications précédentes, **caractérisé en ce que** différents identifiants de sources vidéo sont affectés à différentes propriétés vidéo d'une source vidéo.

13. Procédé selon l'une quelconque des revendications précédentes, **caractérisé en ce que** les identifiants de source vidéo ne sont pas transmis avec chaque image, mais uniquement avec chaque nième image.

14. Procédé selon l'une quelconque des revendications précédentes, **caractérisé en ce qu'**un identifiant en direct dynamique supplémentaire à fréquence image est transmis par des lignes vidéo transmises d'une source vidéo, dans lequel cet identifiant dynamique est évalué dans le décodeur vidéo et dans lequel, lorsque le contenu des lignes vidéo ne varie plus, aucun signal vidéo n'est plus transféré au moniteur respectivement associé dans un temps prédéfini.

15. Procédé selon l'une quelconque des revendications précédentes, **caractérisé en ce que** des identifiants de source dynamiques sont attribués par des interfaces de données entre le codeur et des sources externes.

16. Procédé selon l'une quelconque des revendications précédentes, **caractérisé en ce que** des identifiants de source sont également affectés à d'autres sources, en particulier à des sources audio, et **en ce que** ces identifiants de source sont également comparés à des valeurs théoriques respectivement associées.

17. Procédé selon l'une quelconque des revendications précédentes, **caractérisé en ce que** respectivement un contact (o1, ox) est affecté aux ports de sortie vidéo des décodeurs, lequel n'est actif que lorsqu'une transmission correcte des signaux vidéo est identifiée.

18. Procédé selon l'une quelconque des revendications précédentes, **caractérisé en ce que** le flux de données vidéo transmis par l'intermédiaire du réseau est décodé au moyen d'un décodeur PC et, dans le cas d'une transmission correcte des signaux vidéo, une représentation des signaux vidéo décodés s'effectue sur un moniteur de PC (PM1).

19. Procédé selon l'une quelconque des revendications précédentes, **caractérisé en ce que** le flux de données vidéo transmis par l'intermédiaire du réseau est acheminé à un enregistreur vidéo en réseau (NVR) et les signaux vidéo codés numériquement, y compris les identifiants de source et les informations temps réel, sont enregistrés au moyen de l'enregistreur vidéo en réseau.

20. Procédé selon l'une quelconque des revendications 1 à 18, **caractérisé en ce que** le flux de données vidéo transmis par l'intermédiaire du réseau est acheminé à un enregistreur vidéo en réseau (NVR) et n'est enregistré au moyen de l'enregistreur vidéo en réseau que lorsque les identifiants de source comparés les uns aux autres concordent et que les informations temps réel comparées l'une à l'autre diffèrent l'une de l'autre de moins d'une différence de temps admise.
